Europäisches Patentamt

European Patent Office

Office européen des brevets

(19)

(11) Numéro de publication: **0 289 490 B1**

(12) **FASCICULE DE BREVET EUROPEEN**

(45) Date de publication du fascicule du brevet: **09.05.90**

(51) Int. Cl.⁵: **A 63 B 29/02**

(21) Numéro de dépôt: **86906850.2**

(22) Date de dépôt: **21.11.86**

(86) Numéro de dépôt international:
**PCT/FR86/00394**

(87) Numéro de publication internationale:
**WO 88/03826 02.06.88 Gazette 88/12**

(54) **MOUSQUETON POUR LA PRATIQUE DE L'ESCALADE, DE LA SPELEOLOGIE OU ACTIVITES SIMILAIRES.**

(43) Date de publication de la demande:
**09.11.88 Bulletin 88/45**

(45) Mention de la délivrance du brevet:
**09.05.90 Bulletin 90/19**

(84) Etats contractants désignés:
**AT BE CH DE GB LI LU NL SE**

(56) Documents cités:
**FR-A-2 519 394**
**FR-A-2 582 223**

(73) Titulaire: FRECHIN, Jean-Paul
215, chemin de la Croix-des-Pècles
F-74400 Chamonix (FR)

(72) Inventeur: FRECHIN, Jean-Paul
215, chemin de la Croix-des-Pècles
F-74400 Chamonix (FR)

(74) Mandataire: Laurent, Michel et al
Cabinet LAURENT et GUERRE 20, rue Louis
Chirpaz B.P. 32
F-69131 Ecully Cédex (FR)

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 289 490 B1

**Description**

La présente invention concerne un perfectionnement apporté aux mousquetons utilisés, entre autres, pour la pratique de l'escalade et de la spéléologie.

Les mousquetons commercialisés à ce jour sont constitués, d'une façon traditionnelle, par un corps ayant la forme générale d'un C dont les deux extrémités sont recourbées pour être disposées en regard l'une de l'autre et d'un doigt, monté autour d'un axe monté à l'une des extrémités du corps. Un ressort, disposé à l'intérieur du doigt et appuyé à l'autre extrémité contre une extrémité du corps, repousse toujours le doigt vers l'extérieur contre l'autre extrémité du corps. Ainsi, en utilisation normale, l'utilisateur repousse le doigt du mousqueton pour placer une corde dans l'espace intérieur du mousqueton puis laisse revenir le doigt dans sa position initiale, emprisonnant ainsi la corde.

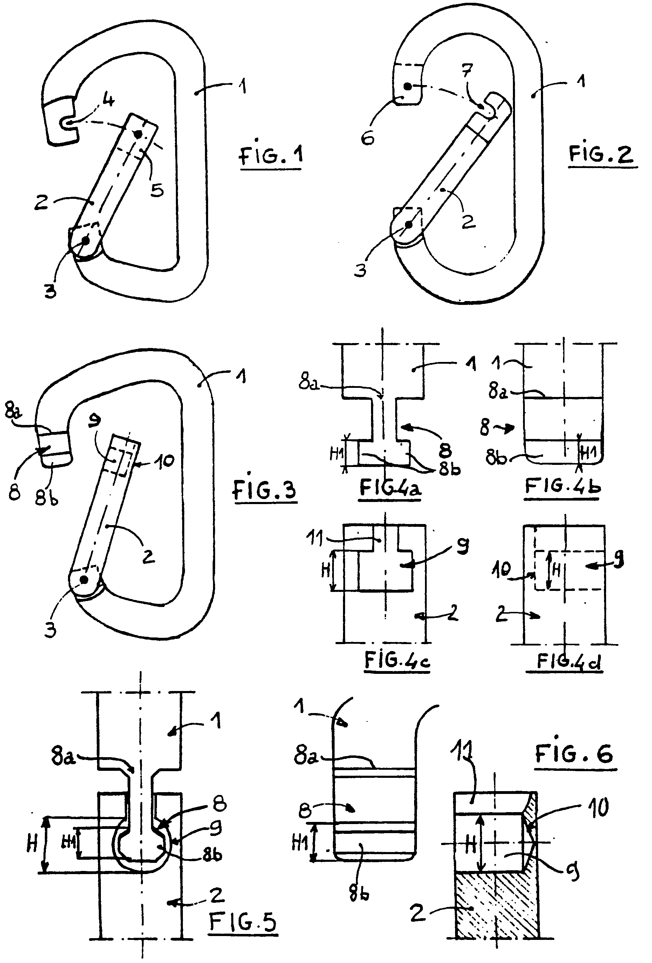

Pour augmenter la résistance à la rupture du mousqueton, tous les mousquetons actuels présentent, à l'opposé de l'axe sur lequel est articulé le doigt, une extrémité en forme de crochet, disposée généralement sur le corps, coopérant avec une goupille transversale disposée en travers de la chappe d'extrémité du doigt. Les figures 1 et 2 annexées illustrent deux modes de réalisation de mousqueton conforme à cet état de la technique.

Une telle disposition présente un inconvénient majeur; en effet, lorsque l'utilisateur cherche à enlever la sangle ou la corde disposée à l'intérieur du mousqueton, celle-ci s'accroche souvent au crochet du corps puisque celui-ci est placé dans l'espace entre le corps et le doigt. Or cet accrochage a souvent lieu à un moment où l'utilisateur est dans une situation d'équilibre précaire, ce qui peut nuire à sa sécurité.

Dans une solution récente, il a été proposé de disposer la partie "crochet" non plus sur le corps mais sur le doigt. On élimine ainsi les risques d'accrochage de la sangle mais la présence du crochet sur le doigt ne supprime pas l'inconvénient précité. De plus, en fabrication, la réalisation du crochet se fait par fraisage avec une fraise de diamètre faible qui casse fréquemment.

Outre ce problème de la présence de parties agressives dans la zone d'ouverture du mousqueton, se pose également celui de la résistance à la rupture que doit présenter un tel ensemble, cette résistance devant être équilibrée entre la partie mâle et la partie femelle. Par ailleurs, outre la résistance dans le sens longitudinal, le crochet doit également présenter une résistance transversale pour éviter tout risque d'ouverture et de désaccouplement des parties mâle et femelle. En effet, en cours d'utilisation, par exemple lors d'une chute, il peut se produire que le mousqueton vienne taper contre un rocher et que sous l'énergie du choc, et malgré la présence du ressort, le doigt recule et ce, d'une longueur suffisante entraînant un échappement de la goupille de l'intérieur du crochet et, par suite, l'ouverture du mousqueton et un risque de casse, étant donné que sa résistance s'en trouve amoindrie.

Or on a trouvé, et c'est ce qui fait l'objet de la présente invention, un nouveau type de mousqueton qui permet de résoudre l'ensemble de ces problèmes et qui, par ailleurs, ne nécessite pour sa fabrication que des moyens simples d'usinage (fraisage, perçage).

D'une manière générale, l'invention concerne donc un perfectionnement apporté aux mousquetons utilisés lors de la pratique de l'escalade, de la spéléologie ou d'autres activités similaires et qui sont constitués:

— d'un corps ayant la forme générale d'un C dont les deux extrémités sont recourbées pour être disposées en regard l'une de l'autre;

— d'un doigt monté articulé autour d'un axe porté à l'une des extrémités du corps, ledit doigt étant soumis à l'action d'un ressort interne tendant à le repousser vers l'extérieur contre l'autre extrémité du corps;

— les deux éléments (corps et doigt) étant réalisés dans des profilés en alliage léger, de section identique, sensiblement cylindriques et constants, les extrémités du corps et du doigt qui peuvent être écartées l'une de l'autre ayant des formes complémentaires, respectivement mâle et femelle, permettant de les encastrer l'une dans l'autre et étant, inscrites à l'intérieur du volume de révolution des profilés.

Le mousqueton conforme à l'invention se caractérise en ce que:

— la partie mâle a une section transversale en forme de T et s'étend sur au moins une partie majoritaire de la longueur du diamètre du profilé et dont les branches formant des reliefs latéraux ont une largeur totale inférieure au diamètre dudit profilé,

— la partie femelle a des formes correspondantes et des dimensions telles qu'un jeu périphérique subsiste non seulement latéralement pour permettre le passage de la partie mâle en forme de T mais également dans le sens longitudinal,

— le fond de la partie femelle ou les côtés de la partie mâle forme butée pour le doigt et limite son déplacement vers l'extérieur.

Dans la suite de la description, l'invention sera décrite pour des mousquetons dans lesquels la partie mâle est réalisée sur le corps alors que la partie femelle est réalisée à l'extrémité du doigt mobile mais il est évident que cela n'est pas limitatif et que des mousquetons conformes à l'invention pourraient être également réalisés de manière inverse.

Avantageusement et en pratique:

— le mousqueton conforme à l'invention est réalisé dans un profilé de section sensiblement cylindrique et constante, de dimensions extérieures faibles (8 à 12 mm en général);

— la partie femelle destinée à recevoir les deux ailes de la partie en T a une forme générale cylindrique d'axe sensiblement perpendiculaire au doigt;

— la partie supérieure du doigt présente, au niveau de l'accrochage, une, surface cylindrique continue est totalement lisse à l'intérieur du mousqueton;

— la partie femelle destinée à recevoir les deux ailes de la partie en T a une forme légèrement oblongue.

L'invention et les avantages qu'elle apporte sera cependant mieux comprise grâce aux exemples de réalisation donnés ci-après à titre indicatif et non limitatif et qui sont illustrés dans les figures annexées dans lesquelles:

— les figures 1 et 2 illustrent comme dit précédemment deux types de mousqueton de l'art antérieur;

— la figure 3 illustre, vu de côté, d'une manière similaire aux figures 1 et 2, un mousqueton réalisé conformément à l'invention;

— les figures 4a et 4b, 4c et 4d sont respectivement des vues partielles, agrandies, d'une part de l'extrémité mâle du corps (fig. 4a et 4b) et, d'autre part, de l'extrémité femelle du doigt (fig. 4c et 4d);

— la figure 5 présente vu en bout, un autre mode de réalisation des extrémités mâle et femelle du corps et du doigt dans un mousqueton conforme à l'invention, ces deux éléments étant représentés en prise et,

— la figure 6 est une vue de côté, du mode de réalisation illustré à la figure 5, l'extrémité du doigt étant représentée en coupe et les deux éléments doigt/corps étant en position écartée l'un de l'autre.

Si l'on se reporte aux figures annexées, les figures 1 et 2 illustrent deux modes de réalisation de mousquetons de l'art antérieur. De tels mousquetons sont constitués essentiellement d'un corps (1) ayant la forme générale d'un C dont les deux extrémités sont recourbées pour être disposées en regard l'une de l'autre. A l'une des extrémités du corps, est monté un doigt (2) articulé autour d'un axe (3). Le doigt (2) est soumis à l'action d'un ressort interne (non représenté) qui tend à le repousser vers l'extérieur contre l'autre extrémité du corps (1). Afin de permettre l'encastrement des deux extrémités l'une dans l'autre, dans le mode de réalisation illustré à la figure 1, l'extrémité (5) du doigt (2) est en forme de chappe alors que l'extrémité correspondante du corps (1) comporte un crochet (4). Dans le mode de réalisation illustré à la figure 2, l'inverse est réalisé, l'extrémité du corps (1) comportant une chappe (6) alors que l'extrémité du doigt (2) comporte un crochet (7). Dans les deux cas, lorsque le mousqueton est ouvert, les parties formant crochet forment donc une zone agressive pouvant entraîner l'accrochage et la détérioration de la corde lors de son introduction ou de sa sortie. Par ailleurs, si la résistance à la traction dans le sens longitudinal est bonne, en ce qui concerne la résistance dans le sens transversal, le risque d'ouverture et de casse du mousqueton subsiste étant donné que lors d'un choc violent, le doigt peut reculer suffisamment pour provoquer son échappement de l'extrémité du corps.

Les mousquetons conformes à l'invention dont deux modes de réalisation sont illustrés aux figures 3 à 6, permettent de surmonter ces inconvénients.

Dans ces deux modes de réalisations, ces mousquetons sont, comme dit précédemment, constitués d'un corps (1) et d'un doigt (2) articulés par l'intermédiaire d'un axe (3) à une extrémité du corps, ce doigt (2) étant également soumis à l'action d'un ressort interne tendant à le repousser vers l'extérieur.

Conformément à l'invention, les extrémités du corps (1) et du doigt (2) qui peuvent être écartées l'une de l'autre ont des formes complémentaires respectivement mâle et femelle qui permettent de les encastrer l'une dans l'autre et dont les dimensions sont telles qu'elles sont inscrites à l'intérieur du volume de révolution des profilés conventionnels, en alliage léger, de section sensiblement cylindrique et constante, utilisés pour la réalisation des mousquetons.

Pour ce faire, la partie mâle (8) a une section transversale en forme de T (voir figure 4a et figure 5) dont la base (8a) disposée dans le plan d'articulation du doigt (2) s'étend sur au moins une partie majoritaire de la lonqueur du diamètre du profilé. Dans le cas présent, cette base (8a) s'étend sur toute la longueur. Par ailleurs, les branches (8b) qui forment des reliefs latéraux ont, quant à elles, une largeur totale inférieure au diamètre du profilé. La partie femelle (9), prévue à l'extrémité du doigt (2) a, quant à elle, des formes correspondantes permettant également son inscription à l'intérieur du volume de révolution des profilés, les dimensions de cette partie femelle (9) étant telles que non seulement, un léger jeu subsiste latéralement, mais également pour que, dans le sens longitudinal, un jeu subsiste de part et d'autre des branches (8b). Pour ce faire, la hauteur H de l'évidement (9) est supérieur à l'épaisseur H1 des branches (8b). Dans ce mode de réalisation, afin de limiter le déplacement vers l'extérieur du doigt (2), la partie femelle (9) est non débouchante de manière à former une paroi (10) formant butée sur la trajectoire du doigt.

Dans l'exemple de réalisation illustré par les figures 3 à 4d, la partie femelle (9) a, comme la partie mâle (8), une forme de T et peut être réalisée, par exemple par électro-érosion. Les figures 5 et 6 illustrent une variante conforme à l'invention dans laquelle si la partie mâle en forme de T (8) du corps (1) est sensiblement la même que dans l'exemple précédent et peut être réalisée par fraisage, la partie (9) quant à elle, est réalisée par perçage et fraisage. Un tel mode de réalisation particulièrement simple et qui, par ailleurs, permet de réaliser des chanfreins pour améliorer la résistance est le suivant. La partie femelle (9) est réalisée par un simple perçage sensiblement perpendiculaire au doigt (2) (par exemple de diamètre 7 mm pour un doigt de diamètre 11 mm). Si l'on veut obtenir une butée (10) du doigt (2) contre le corps, ce perçage sera bien entendu non débouchant. La partie (11) permettant le passage de la partie mâle est, quant à elle, réalisée par fraisage (4 mm de large environ) pour un mousqueton ayant les dimensions précédentes.

Comme dans l'exemple précédent, la hauteur H de la partie femelle (9) est supérieure à la hauteur H1 de la partie mâle, ce qui permet d'avoir un jeu vertical améliorant la résistance à la rupture du mousqueton.

A titre indicatif, des mousquetons réalisés conformément à l'invention dans les profilés de diamètre 11 mm présentent une résistance à la rupture en traction supérieure à 2200 DAN et ce, sans augmentation de poids et en évitant toute présence de parties agressives dans la zone d'ouverture du mousqueton.

Bien entendu, l'invention n'est pas limitée aux exemples décrits précédemment, et comme indiqué dans le préambule, on peut réaliser la partie mâle sur le doigt et la partie femelle sur le corps. Par ailleurs, il est possible de réaliser des mousquetons comportant aussi bien un doigt (2) rectiligne qu'un doigt (2) courbe ou en forme de V; dans un tel cas, il suffit alors d'incliner le fraisage de la partie mâle pour qu'elle corresponde à la trajectoire finale du doigt (2). L'invention peut également s'appliquer aux mousquetons dont l'ouverture du doigt se fait dans un plan différent de celui de celui du mousqueton. De même, la butée (10) pourrait être réalisée sur la partie (8) du corps (1) sans sortir de l'invention.

Il convient également de noter qu'un tel système de réalisation des parties mâle et femelle permet d'obtenir un ensemble dont la résistance est parfaitement équilibrée entre ces deux parties. Par ailleurs, la partie mâle s'étendant sur une grande longueur pouvant aller jusqu'au diamètre du profilé, un tel type de mousqueton présente une très grande résistance en traction dans le sens transversal, nettement supérieure à celle des mousquetons existants et, de plus, compte-tenu du fait que la partie mâle et la partie femelle ont une surface de contact très longue, on élimine pratiquement tout risque d'ouverture pouvant résulter d'un choc contre une paroi, par exemple lors d'une chute de l'utilisateur.

Enfin, il convient de noter que dans l'exemple de réalisation illustré par les figures 5 et 6, la paroi (10) formant butée entre l'extrémité du doigt et l'extrémité du corps, participe également à la résistance à la rupture de la partie supérieure du doigt (2) dont les deux lèvres tendent à s'écarter sous la pression de la partie (8) quand on exerce un effort de traction important sur le mousqueton (figures impaires). Il pourrait être également envisagé de prévoir à la partie supérieure du doigt une face inclinée allant à la rencontre d'une partie correspondante du corps pour réaliser la butée du doigt sur ledit corps. Bien qu'un tel mode de réalisation facilite l'usinage des formes en T débouchantes, il ne permet pas de renforcer ces dernières en résistance à la rupture.

## Revendications

1. Mousqueton pour la pratique de l'escalade, de la spéléologie ou activités similaires, constitué:

— d'un corps (1) ayant la forme générale d'un C dont les deux extrémités sont recourbées pour être disposées en regard l'une de l'autre;

— d'un doigt (2) monté articulé autour d'un axe (3) porté à l'une des extrémités du corps (1), ledit doigt (2) étant soumis à l'action d'un ressort interne tendant à le repousser vers l'extérieur contre l'autre extrémité du corps;

— les deux éléments (corps 1 et doigt 2) étant réalisés dans des profilés en alliage léger, de section identique, sensiblement cylindriques et constants et les extrémités du corps (1) et du doigt (2) qui peuvent être écartées l'une de l'autre ayant des formes complémentaires, respectivement mâle (8) et femelle (9), permettant de les encastrer l'une dans l'autre, étant inscrites à l'intérieur du volume de révolution des profilés, caractérisé en ce que:

— la partie mâle (8) a une section transversale en forme de T, s'étend dans le plan du mousqueton sur au moins une partie majoritaire de la longueur du diamètre du profilé et dont les branches (8b) formant des reliefs latéraux ont une largeur totale inférieure au diamètre dudit profilé et la partie femelle (9) a des formes correspondantes et des dimensions telles qu'un jeu périphérique subsiste non seulement latéralement pour permettre le passage de la partie mâle en forme de T mais également dans le sens longitudinal;

— le fond de la partie femelle (9) ou les côtés de la partie mâle (8) forme butée pour le doigt (2) et limite son déplacement vers l'extérieur.

2. Mousqueton selon la revendication 1, caractérisé en ce que la partie femelle (9) destinée à recevoir les deux ailes (8b) de la partie en T (8) a une forme générale cylindrique d'axe sensiblement perpendiculaire au doigt (2).

3. Mousqueton selon l'une des revendications 1 et 2, caractérisé par le fait que la partie supérieure du doigt (2) présente, au niveau de l'accrochage, une surface cylindrique totalement lisse à l'intérieur du mousqueton.

4. Mousqueton selon l'une des revendications 1 à 3, caractérisé par le fait que la partie femelle (9) destinée à recevoir les deux ailes (8b) de la partie en T (8) a une forme légèrement oblongue.

## Patentansprüche

1. Karabinerhaken für das Klettern, die Höhlenforschung oder dgl. Aktivitäten,

— mit einem Körper (1), der die allgemeine Form eines C aufweist, dessen beide äußeren Enden derart umgebogen sind, daß sie einander gegenüberliegen;

— mit einem Finger (2), der um eine Achse (3) schwenkbar ist, die von einem der Enden des Körpers (1) getragen ist, wobei der Finger (2) der Wirkung einer inneren Feder ausgesetzt ist, die ihn nach außen gegen das andere der Enden des Körpers drückt;

— wobei die beiden Bauteile (Körper 1 und Finger 2) aus Profilen einer Leichtmetall-Legierung mit gleichem und gleichbleibendem, etwa zylindrischen Querschnitt hergestellt sind, und wobei die voneinander weg bewegbaren Enden des Körpers (1) und des Fingers (2) komplementäre bzw. männlich eindringende (8) und weiblich aufnehmende (9) Formen aufweisen, wodurch diese ineinander gefügt werden können, und wobei diese Formen im Inneren des Umfangsvolumens der Profile vorgesehen sind, dadurch gekennzeichnet,

— daß der männlich eindringende Abschnitt (8) im Längsschnitt die Form eines T einnimmt, das sich in der Karabinerhakenebene über zumindest einen wesentlichen Teil der Länge des Durchmessers des Profils erstreckt, und dessen Zweige (8b) seitliche Erhebungen bilden, deren gesamte Größe geringer ist, als der Durchmesser des Profils, und daß der weiblich aufnehmende Abschnitt (9) entsprechende Formen und solche Ausmaße aufweist, daß ein umfängliches Spiel vorhanden ist, das nicht nur seitlich, um den Durchtritt des männlich eindringenden Abschnitts in Form eines T's zu ermöglichen, vorhanden ist, sondern auch in Längsrichtung;

— daß der Boden des weiblich aufnehmenden Abschnittes (9) oder die Seiten des männlich eindringenden Abschnitts (8) einen Anschlag für den Finger (2) bilden und dessen Verschiebung in Richtung Außenseite begrenzen.

2. Karabinerhaken nach Anspruch 1, dadurch gekennzeichnet, daß der weiblich aufnehmende Abschnitt (9), der dazu vorgesehen ist, die beiden Seitenzweige (8b) des Abschnittes (8) in Form eines T aufzunemen, eine allgemein zylindrische Form aufweist, deren Achse etwa senkrecht zum Finger (2) verläuft.

3. Karabinerhaken nach Anspruch 1 oder 2, dadurch gekennzeichnet, daß der obere Bereich des Fingers (2), auf Höhe der Verhakung, eine zylindrische Oberfläche aufweist, die an der Innenseite des Karabinerhakens völlig glatt ist.

4. Karabinerhaken nach einem der Ansprüche 1 bis 3, dadurch gekennzeichnet, daß der weiblich aufnehmende Abschnitt (9), der dazu vorgesehen ist, die beiden Seitenzweige (8b) des Abschnitts (8) in Form eines T's aufzunehmen, eine leicht längliche Form aufweist.

**Claims**

1. Snap hook used in climbing, pot holing or similar activities, constituted by:

— a body (1) having a general C shape, the two ends of which are bent in so as to be placed in facing relationship, one with respect to the other;

— an arm (2) mounted for pivoting about a pin (3) carried at one of the ends of the body (1), said arm (2) being subjected to the action of an internal spring which tends to drive it outwardly against the other end of the body;

— the two elements (body 1 and arm 2) being produced from sectional pieces in light alloy, of identical cross-section, substantially cylindrical and constant, the ends of the body (1) and of the arm (2) which may be apart from each other, having complementary shapes, respectively male (8) and female (9) shapes, enabling them to fit one inside the other, and being inscribed inside the volume of revolution of the sectional pieces, characterized in that:

— the male part (8) having a T-shaped cross section and extending in the plane of the snap hook over at least most of the length of the diameter of the sectional piece, and of which the branches (8b) forming lateral reliefs, have a total width smaller than the diameter sectional piece, the female part (9) having corresponding shapes and dimensions such that a peripheral clearance is left not only laterally to allow the passage of the T-shaped male part, but also longitudinally;

— the bottom of the female part (9) or the sides of the male part (8) form an abutment for the arm (2) and limits its outward movement.

2. Snap hook according to claim 1, characterized in that the female part (9) which is designed to receive the two wings (8b) of the T-shaped part (8) has a general cylindrical shape of axis substantially perpendicular to the arm (2).

3. Snap hook according to one of claims 1 and 2, characterized by the fact that the upper part of the arm (2) presents, at the level of the fastening, a continuous and completely smooth cylindrical surface inside the snap hook.

4. Snap hook according to one of claims 1 to 3, characterized by the fact that the female part (9) which is designed to receive the two wings (8b) of the T-shaped part (8), has a slightly oblong shape.

FIG. 1

FIG. 2

FIG. 3

FIG.4a

FIG.4b

FIG.4c

FIG.4d

FIG. 6

FIG. 5